# EUROPEAN PATENT APPLICATION

(11) **EP 2 541 946 A2**
(43) Date of publication of application: **02.01.2013**
(21) Application number: 12162479.5
(22) Date of filing: 30.03.2012
(51) Int. Cl.: H04N 13/02, H04N 13/00

(54) **Image processing apparatus and image processing method thereof**

(30) Priority: 28.06.2011 KR 20110062759
(71) Applicant: Samsung Electronics Co., Ltd., Suwon-si, Gyeonggi-do, 443-742 (KR)
(72) Inventor: Ahn, Won-seok, Gyeonggi-do (KR); Han, Seung-hoon, Seoul (KR); Kwon, Oh-jae, Gyeonggi-do (KR)
(74) Representative: Robinson, Ian Michael

(57) **Abstract**

An apparatus and method for processing an image are provided. The image processing apparatus uses a two-dimensional (2D) video signal and depth information corresponding to the 2D video signal to generate a three-dimensional (3D) video signal includes: an image receiver which receives a 2D video signal containing a background and an object; and an image processor which adjusts a transition area corresponding to a boundary between the object and the background in the depth information, and renders a 3D image from the 2D video signal through the adjusted transition area.

## Description

### CROSS-REFERENCE TO RELATED PATENT APPLICATION

This application claims priority from Korean Patent Application No. 10-2011-0062759, filed on June 28, 2011 in the Korean Intellectual Property Office.

### BACKGROUND

### 1. Field

Apparatuses and methods consistent with the exemplary embodiments relate to an apparatus and method for processing an image, and more particularly, to an apparatus and method for processing an image, in which a two-dimensional (2D) video signal is converted into a three-dimensional (3D) video signal.

### 2. Description of the Related Art

Rendering is a process or technique for producing a 3D image by giving a realistic effect to a 2D image by using external information such as a light source, position, color, etc. Such a rendering method includes a mesh-based rendering method using a polygonal mesh, a depth-image-based rendering method using 2D depth information, etc.

In the case where the depth information is used for the rendering, there is a problem that uniformity in a boundary of an object varies depending on virtual viewing angles. In particular, there is a problem that the object is transformed after the rendering because the object is lost or stretched.

### SUMMARY

According to the present invention there is provided an apparatus and method as set forth in the appended claims. Other features of the invention will be apparent from the dependent claims, and the description which follows. One or more exemplary embodiments provide an apparatus and method for processing an image, in which the loss and stretching of an object are compensated for when depth information is used for rendering a 3D video signal from a 2D video signal.

Another exemplary embodiment provides an apparatus and method for processing an image in which a boundary of an object is naturally represented when depth information is used for rendering a 3D video signal from a 2D video signal.

According to an aspect of an exemplary embodiment, there is provided an image processing apparatus that uses a 2D video signal and depth information corresponding to the 2D video signal to generate a 3D video signal, the apparatus including: an image receiver which receives a 2D video signal containing a background and at least one object; and an image processor which adjusts a transition area corresponding to a boundary between the object and the background in the depth information and renders a 3D video signal from the 2D video signal through the adjusted transition area.

The image processor may expand a compression area, where an object is compressed in a direction the object is shifted in the transition area.

The image processor may expand the compression area so that pixel positions of the object cannot be substituted by rendering.

The image processor may increase a depth value of a stretch area, where an object is stretched in a direction the object is shifted in the transition area, and perform smoothing so that the increased depth value of the stretch area can be connected to a depth value of the background adjacent to the object.

The image processor may increase the depth value of the background adjacent to the object to connect the depth value of the background adjacent to the object with the increased depth value of the stretch area.

According to an aspect of another exemplary embodiment, there is provided an image processing method using a 2D video signal and depth information corresponding to the 2D video signal to generate a 3D video signal, the method including: receiving a 2D video signal containing a background and at least one object; adjusting a transition area corresponding to a boundary between the object and the background in the depth information; and rendering a 3D video signal from the 2D video signal through the adjusted transition area.

The adjusting the transition area may include expanding a compression area, where an object is compressed in a direction the object is shifted in the transition area.

The adjusting the transition area may also include expanding the compression area so that pixel positions of the object cannot be substituted by rendering.

The adjusting the transition area may include increasing a depth value of a stretch area, where an object is stretched in a direction the object is shifted in the transition area; and performing smoothing so that the increased depth value of the stretch area can be connected to a depth value of the background adjacent to the object.

The performing smoothing may include increasing the depth value of the background adjacent to the object to connect the depth value of the background adjacent to the object with the increased depth value of the stretch area.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram of an image processing apparatus according to an exemplary embodiment;

FIG. 2 is a view for explaining signal distortion caused when depth information is used for rendering a 2D video signal;

FIG. 3 is a view for explaining adjustment of depth information used when an image processing apparatus renders a 2D video signal; and

FIG. 4 is a control flowchart for explaining a rendering method of the image processing apparatus according to an exemplary embodiment.

### DETAILED DESCRIPTION OF EXEMPLARY EMBODIMENTS

Exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

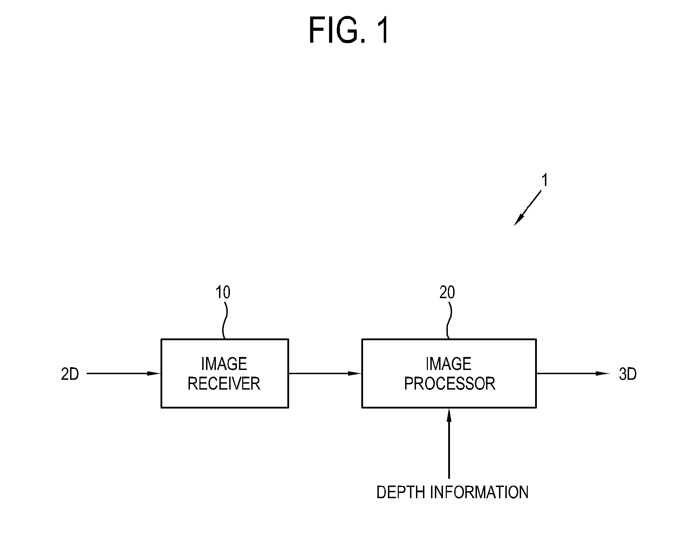

FIG. 1 is a control block diagram of an image processing apparatus according to an exemplary embodiment.

As shown therein, an image processing apparatus 1 according to this exemplary embodiment includes an image receiver 10 and an image processor 20. The image processing apparatus 1 may be realized by an apparatus capable of generating a 3D video signal corresponding to a 2D video signal, and may also be realized by a computer-readable recording medium storing a program to implement an image processing method to be described later. Further, such an image processing apparatus 1 may be achieved by an apparatus of a service firm that receives a 2D video signal, converts the received 2D signal into a 3D video signal and provides the 3D video signal to a user, or may be achieved by a part of the whole apparatus for providing the corresponding service.

The image receiver 10 receives a 2D video signal containing a background and at least one object. The image receiver 10 may include various connectors and interfaces for receiving a video signal via wired or wireless communication. Specifically, the image receiver 10 may include a broadcast receiver capable of receiving a sky wave such as a broadcasting signal and/or a satellite signal, and may include an interface for receiving a video signal from a web service via the Internet.

The video signal may contain a broadcasting signal, a 2D moving picture such as a film, an animation, or an advertisement image, etc. A frame image constituting a video signal includes a background and at least one object. The frame image may include only the background and one or more objects.

The image processor 20 adjusts a transition area corresponding to a boundary between the object and the background in depth information, and renders the 2D video signal based on the adjusted transition area. The image processor 20 uses a 2D video signal and depth information, i.e., a depth map showing depth of an object so as to form a 3D video signal. The depth information means a 2D image may be obtained by mapping how deep an object is located, i.e., a depth value to each pixel. The depth information is used as information for calculating a parallax disparity of an object when a 3D video signal is converted from a 2D video signal, and corresponds to key information used while rendering the 2D video signal. The depth information may be received from an external device, obtained by a user, a calculator or the like, or may be received together with a 2D video signal through the image receiver 10.

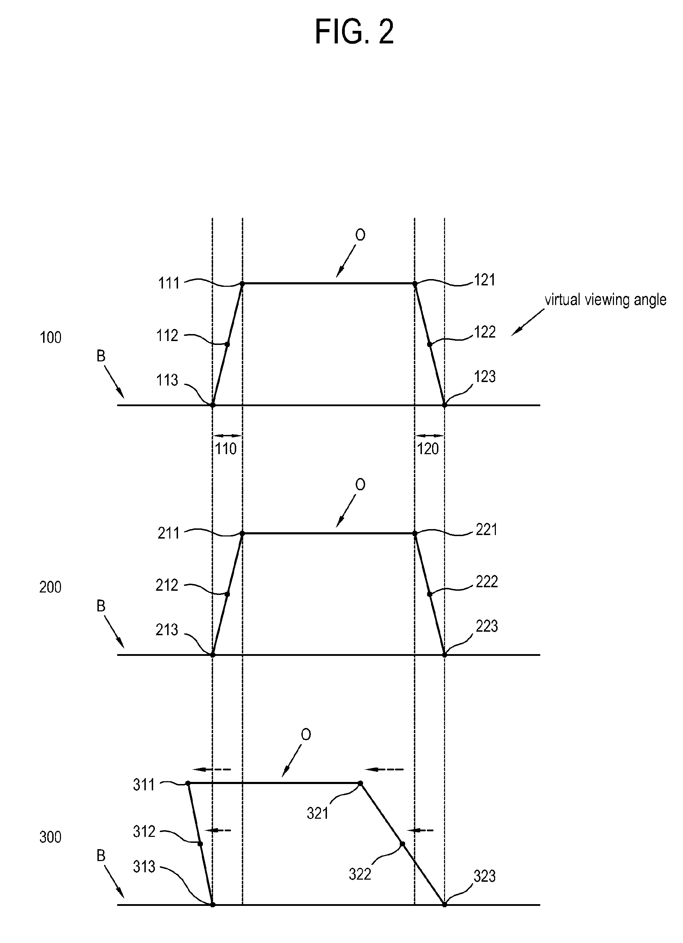

FIG. 2 is a view for explaining signal distortion caused when depth information is used for rendering a 2D video signal. As shown in FIG. 2, depth information 100 contains depth values of a background B and one object O. The background B has a depth value of 0, and the object O has a certain depth value to float on the background B. In accordance with the depth value, the object O is adjusted according to a horizontal parallax disparity. That is, as the depth value becomes higher, shift in pixel data of an image increases. Typically, the depth information 100 includes transition areas 110 and 120 corresponding to boundaries between the object O and the background B.

Also, a 2D video signal 200 may have a transition area where a boundary between the object O and the background B is not definite and pixel data of the object O and pixel data of the background B are mixed.

If the 2D video signal 200 is rendered using the depth information 100 according to virtual viewing angles, the object O is shifted in a horizontal direction and the 2D video signal 300 is changed into a rendering image 300. In this case, first pixel data 211 of the 2D video signal is changed into a first rendering value 311 through rendering based on a first depth value 111, and second pixel data 212 is changed into a second rendering value 312 through rendering based on a second depth value 112. Third pixel data 213 positioned in an area where the object O meets the background B is not shifted since the third depth value 113 is 0, and thus expressed into a third rendering value 313. If the object O is viewed from a virtual viewing angle, it looks as if the transition area 110 present in the 2D video signal does not exist in the rendering image 300 and the object O is cut by the reverse of the pixel data. This means that an image corresponding to the object O is lost as pixel positions of the object 0 are substituted after the rendering. If the 2D video signal is rendered, the object O has a cubic effect of floating on the background B and its boundary becomes natural like the 2D video signal before the rendering. However, the rendering image 300 may have a compression area where the object is compressed.

Also, fourth pixel data 221 of the 2D video signal is changed into a fourth rendering value 321 through rendering based on a fourth depth value 121, and sixth pixel data 223 is changed into a sixth rendering value 323 through rendering based on a sixth depth value 123. Fifth pixel data 222 positioned in a transition area between the fourth pixel data 221 and the sixth pixel data 223 is changed into a fifth rendering value 322 present in between the fourth rendering value 321 and the sixth rendering value 323 through rendering based on a fifth depth value 122. Unlike the opposite of the object O, the transition area 120 of the object is more expanded than the 2D video signal. Therefore, the image appears stretched.

That is, if the 2D video signal 200 is rendered using the depth information 100, there is a problem that the boundary of the object O is not uniform because the object is compressed or stretched according to virtual viewing directions. If a virtual viewing direction is opposite to that of FIG. 2, the compression and stretch areas of the object are swapped.

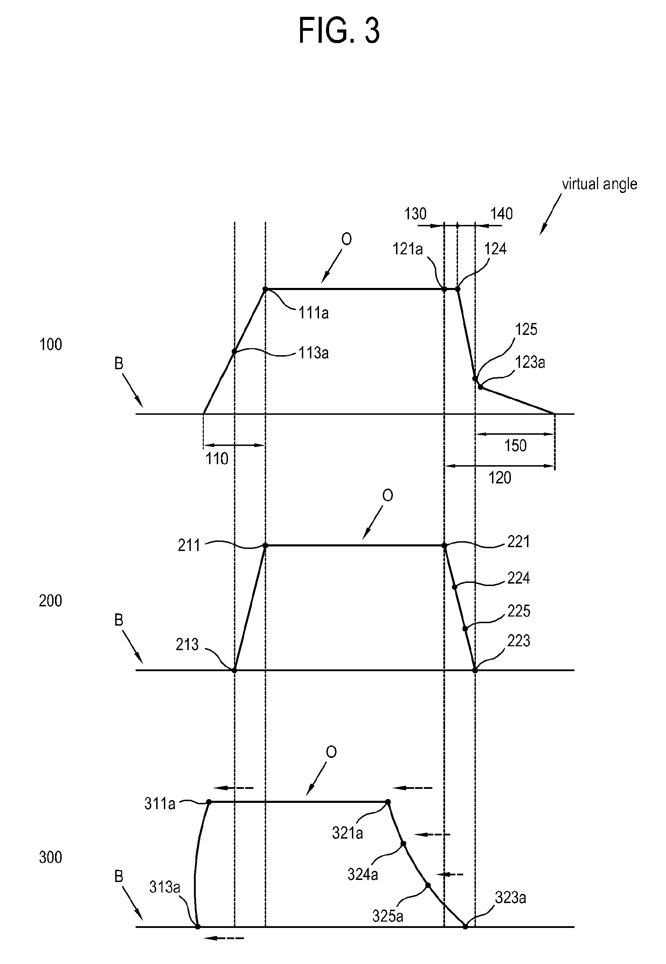

FIG. 3 is a view for explaining adjustment of depth information used when an image processing apparatus renders a 2D video signal. In this exemplary embodiment, when the object O is shifted according to viewing directions, an area corresponding to a part where the object O is compressed between the transition areas 110 and 120 of the depth information 100 is defined as a compression area 110, and an area corresponding to a part where the object O is stretched is defined as a stretch area 120.

The image processor 20 in this exemplary embodiment expands the compression area 110 so as to prevent the object O from being cut as the pixel data of the object O is lost as shown in FIG. 2. This can be achieved by decreasing a tangent of a depth value constituting the compression area 110. For example, if the compression area 110 is expanded, the first pixel data 211 is changed into the first rendering value 311a through rendering based on the first depth value 111a. The third pixel data 213, which is positioned in an area where the object O meets the background B, is shifted according to the third depth value 113a and displayed as a third rendering value 313a in the rendering image 300. That is, the compression area 110 is expanded and the third pixel data 213 is shifted during the rendering, thereby preventing the boundary of the object O from being reversed. When the object O is viewed in the virtual viewing direction, the third pixel data 213 may be shifted up to an area where the pixel position of the object B is not substituted. Through a process of simulating the rendering while expanding the compression area 110, the third pixel data 213 may be properly shifted. Also, the depth information 100 may be adjusted by applying an operation or algorithm to the compression area 110 to be expanded corresponding to the virtual viewing angle and the disparity of the object O.

The image processor 20 increases the depth value of the stretch area 120 in the depth information 100 so that the object O cannot be expanded by the rendering, and performs smoothing so that the increased depth value of the stretch area 120 can be connected to the depth value of the background B adjacent to the object O. The adjusted stretch area 120 may include three zones. A first zone 130 is a zone of which the existing depth value is increased by the same value as the depth value of the object O. A second zone 140 corresponds to a part where the end of the first zone 130 and the existing depth value are connected so as to have a larger value than the existing depth value, while having a larger tangent than the existing stretch area. The third area 150 corresponds to a part where the end point of the second zone 140 and the depth value of the background B are connected.

The fourth pixel data 221 and the seventh pixel data 224 are respectively changed into a fourth rendering value 321a and a seventh rendering value 324a through the rendering in the first zone 130. The eighth pixel data 225 is expressed into an eighth rendering value 325a in the rendering image 300 according to an eighth depth value 125 corresponding to an intersection between the second zone 140 and the third zone 150. The sixth pixel data 223 adjacent to the background B in the boundary between the object O and the background B is shifted unlike FIG. 2, and expressed into the sixth rendering value 323a.

The first zone 130 and the second zone 140 prevent the boundary of the object O from being expanded. Particularly, the first zone 130 causes the boundary of the object O to be formed similarly to the original boundary of the 2D video signal, and the second zone 140 prevents the boundary of the object O from being stretched like FIG. 2. If the second video signal 200 is rendered according to the third zone 150, a depth effect is given to a part corresponding to the background B. That is, the background B shifted in a direction of the object O, so that the expansion of the object O can be decreased. Further, the depth values of the background B and the object O are smoothly connected, so that the rendered image appears natural.

In brief, the image processor 20 in this exemplary embodiment expands the compression area 110 so as to prevent the object O from being lost, and increases the depth value of the stretch area 120 and a tangent of the depth value, thereby compensating for the stretch of the boundary of the object O.

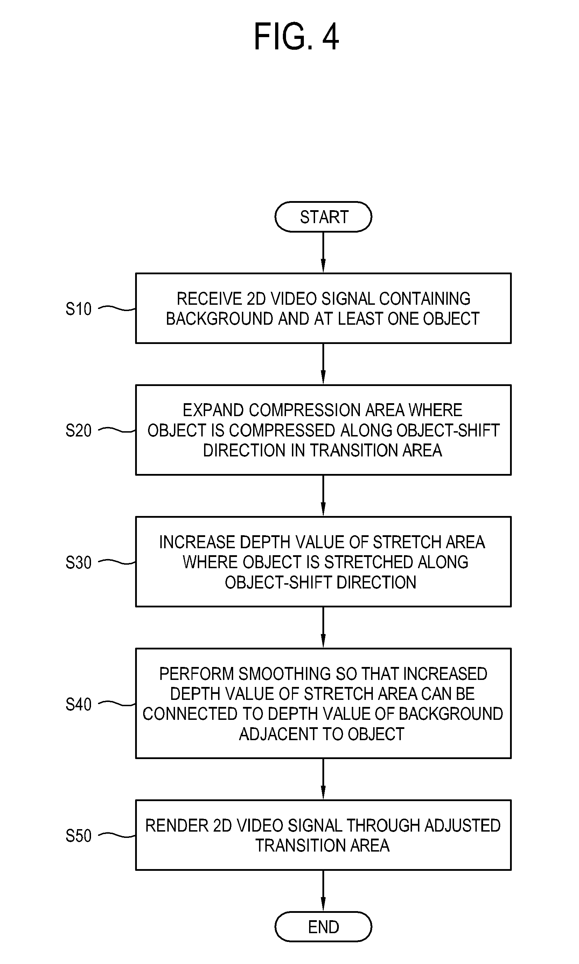

FIG. 4 is a control flowchart for explaining a rendering method of the image processing apparatus according to an exemplary embodiment. Referring to FIG. 4, the rendering method of FIG. 3 is as follows.

First, the 2D video signal 200 containing the background B and at least one object O is received (S10). At this time, the depth information 100 used in generating a 3D video signal may be received together with the 2D video signal 200, or may be input to the video processor 200 through another route.

The image processor 20 adjusts the transition areas 110 and 120 corresponding to the boundaries between the object O and the background B in the depth information 100. Specifically, the compression area 110 where the object O is compressed is expanded in a direction which the object O is shifted in the transition area (S20). Thus, the compression area 110 is expanded without substituting the pixel positions of the object O corresponding to the boundary through the rendering.

Also, the image processor 20 increases the depth value of the stretch area 120 where the object is stretched in the direction which the object O is shifted (S30). The stretch area 120 is divided into the first zone 130, the second zone 140 and the third zone 150, and the tangent of the depth value corresponding to the boundary is increased and the depth value of the background B is also increased so that the boundary of the object O can be clearly displayed without being stretched.

Further, the image processor 20 performs smoothing so that the increased depth value of the stretch area 120 can be connected to the depth value of the background B adjacent to the object O, like the third zone 150, thereby adjusting the transition area 120 (S40). In the smoothing stage, the depth values of the object O and the background B are increased, thereby connecting with the increased depth value of the stretch area 120.

Then, the image processor 20 renders the 3D image from a 2D video signal 200 using the adjusted transition areas 110 and 120 (S50).

As described above, provided are an apparatus and method for processing an image, in which loss and stretch of an object are compensated when depth information is used for rendering a 2D video signal into a 3D video signal.

Further, provided are an apparatus and method for processing an image, in which a boundary of an object is naturally represented when depth information is used for rendering a 2D video signal into a 3D video signal.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, while not required in all aspects, one or more units of the image processing apparatus can include a processor or microprocessor executing a computer program stored in a computer-readable medium. Further, an exemplary embodiment may display the rendered 3D video signal on a monitor, screen, projector, display, or the like.

Although a few preferred embodiments have been shown and described, it will be appreciated by those skilled in the art that various changes and modifications might be made without departing from the scope of the invention, as defined in the appended claims.

## Claims

1. An image processing apparatus, comprising:
an image receiver which receives a two-dimensional (2D) video signal containing a background and at least one object; and
an image processor which adjusts a transition area corresponding to a boundary between the object and the background in depth information corresponding to the 2D video signal, and renders the 2D video signal into a three-dimensional (3D) video signal using the adjusted transition area.

2. The apparatus according to claim 1, wherein the image processor expands a compression area where an object is compressed in a direction the object is shifted in the transition area.

3. The apparatus according to claim 2, wherein the image processor expands the compression area so that pixel positions of the object cannot be substituted by rendering.

4. The apparatus according to claim 1, wherein the image processor increases a depth value of a stretch area, where an object is stretched in a direction the object is shifted in the transition area, and performs smoothing so that the increased depth value of the stretch area can be connected to a depth value of the background adjacent to the object.

5. The apparatus according to claim 4, wherein the image processor increases the depth value of the background adjacent to the object to connect the depth value of the background adjacent to the object with the increased depth value of the stretch area.

6. An image processing method comprising:
receiving a two-dimensional (2D) video signal containing a background and an object;
adjusting a transition area corresponding to a boundary between the object and the background in depth information corresponding to the 2D video signal; and
rendering the 2D video signal into a three-dimensional (3D) video signal through the adjusted transition area.

7. The method according to claim 6, wherein the adjusting the transition area comprises expanding a compression area where an object is compressed in a direction the object is shifted in the transition area.

8. The method according to claim 7, wherein the adjusting the transition area comprises expanding the compression area so that pixel positions of the object are not substituted by rendering.

9. The method according to claim 6, wherein the adjusting the transition area comprises:
increasing a depth value of a stretch area, where an object is stretched in a direction the object is shifted in the transition area; and
performing smoothing so that the increased depth value of the stretch area can be connected to a depth value of the background adjacent to the object.

10. The method according to claim 9, wherein the performing smoothing comprises increasing the depth value of the background adjacent to the object to connect the depth value of the background adjacent to the object with the increased depth value of the stretch area.
